# FASCICULE DE BREVET EUROPEEN

(11) **EP 1 444 119 B1**
(45) Date de publication et mention de la délivrance du brevet: **18.04.2007**
(21) Numéro de dépôt: 02793238.3
(22) Date de dépôt: 14.11.2002
(51) Int. Cl.: B60S 1/38

(54) **REVETEMENT POUR UNE LAME D'ESSUYAGE D'ESSUIE-GLACE A RETENTION D'EAU, LAME D'ESSUYAGE MUNIE D'UN TEL REVETEMENT ET PROCEDE POUR REVETIR UNE LAME D'UN TEL REVETEMENT**
BESCHICHTUNG FÜR EIN WISCHBLATT EINES SCHEIBENWISCHERS MIT WASSERRETENTION, WISCHBLATT MIT DIESER BESCHICHTUNG UND VERFAHREN ZUR BESCHICHTUNG EINES WISCHBLATTS MIT DIESER BESCHICHTUNG
WATER-RETENTION COATING FOR A WINDSCREEN WIPER BLADE, WIPER BLADE PROVIDED WITH SAME AND METHOD FOR COATING A BLADE WITH SAME

(30) Priorité: 14.11.2001 FR 0114753; 14.11.2001 FR 0114754
(43) Date de publication de la demande: 11.08.2004
(73) Titulaire: VALEO SYSTEMES D'ESSUYAGE, 78321 La Verrière (FR)
(72) Inventeur: BRAUN, Alexis, F-63500 Issoire (FR)
(86) Numéro de dépôt international: PCT/FR2002/003905
(87) Numéro de publication internationale: WO 2003/042016

(56) Documents cités:
- EP-A- 0 635 410
- US-A- 2 908 028
- US-A- 2 952 865
- US-A- 2 971 209
- US-A- 3 040 359
- US-A- 4 045 838
- US-A- 5 716 699
- US-A- 6 017 582
- US-B1- 6 175 986
- PATENT ABSTRACTS OF JAPAN vol. 1998, no. 05, 30 avril 1998 (1998-04-30) & JP 10 007903 A (FUKOKU CO LTD;NISSAN MOTOR CO LTD), 13 janvier 1998 (1998-01-13)

## Description

La présente invention concerne un revêtement sur une lame d'essuyage en caoutchouc ou en élastomère d'un essuie-glace de véhicule, du type comportant un additif permettant de réduire le coefficient de frottement entre la lame et la vitre.

Afin d'améliorer la qualité d'essuyage obtenue au moyen d'une lame d'essuyage, en caoutchouc ou en élastomère naturel ou synthétique, il est connu de la munir d'un revêtement comportant une poudre, notamment de carbure cristallin sous forme de graphite naturel ou artificiel, comportant des particules lamellaires de très petites dimensions (US-A-4 045 838). Ces particules ont une structure lamellaire, ce qui leur permet d'avoir une fonction équivalente à celle d'un "lubrifiant" permettant d'améliorer de manière importante la qualité de l'essuyage.

Il est connu de réaliser un tel revêtement à l'aide d'une solution constituée essentiellement par un liant, sous forme d'une résine acrylique, vinylique ou styrènique ou d'uréthane dans lequel est dispersée la poudre de graphite.

Le revêtement est réalisé par trempage de la lame dans la solution ou par enduction de la lame au moyen de la solution, puis par séchage.

Un tel revêtement, s'il permet d'améliorer la qualité de l'essuyage, a pour inconvénient de générer certains phénomènes désagréables (retournement, crissement...) lorsque la surface vitrée est peu humide, aussi appelée "vitre séchante".

Ces phénomènes sont inexistants lorsque la vitre est humide car un film d'eau est toujours présent entre la vitre et la lame d'essuie-glace, et ce film d'eau agit lui aussi comme un lubrifiant. En phase de "vitre séchante" ou lors de l'essuyage à sec, l'absence du film d'eau provoque une augmentation du coefficient de frottement entre la vitre et la lame d'essuie-glace, d'où les phénomènes désagréables.

En outre, un tel revêtement a pour inconvénient de ne pas pouvoir être coloré du fait de la présence de graphite. En effet, le graphite est de couleur noire et la proportion de graphite dans la solution est de l'ordre de 30% en poids. Ainsi, la proportion de pigments nécessaire pour obtenir une coloration du revêtement serait trop importante et risquerait de nuire à la qualité de l'essuyage.

L'invention a pour but de proposer un nouveau revêtement de lubrification des lames d'essuie-glace qui permette la rémanence d'un film d'eau entre la lame d'essuie-glace et la vitre, notamment pendant le début de la phase d'essuyage en "vitre séchante".

Dans ce but, l'invention propose un revêtement pour une lame d'essuyage en caoutchouc ou en élastomère d'un essuie-glace de véhicule, selon les caractéristiques de la revendication 1.

Selon d'autres caractéristiques de l'invention :
- l'additif est de couleur claire ;
- l'additif est une poudre minérale ;
- la structure de l'additif est lamellaire ;
- l'additif est du talc ;
- la granulométrie moyenne de la poudre est égale à environ 4 µm ;
- le revêtement comporte un autre composant permettant de réduire le coefficient de frottement entre la lame et la vitre ;
- le revêtement comporte un élément imperméabilisant.

L'invention propose aussi une lame d'essuyage d'un essuie-glace de véhicule automobile, caractérisée en ce qu'elle est revêtue d'un revêtement conforme aux enseignements de l'invention.

On décrira maintenant un revêtement conforme aux enseignements de l'invention.

Le revêtement conforme à l'invention possède un caractère hydrophile, c'est-à-dire qu'il peut absorber une certaine quantité d'eau.

Ce caractère hydrophile du revêtement est obtenu par sa structure qui présente des cavités.

Le revêtement comporte un additif qui permet d'améliorer la qualité de l'essuyage. Cet additif est une poudre minérale, qui peut être du kaolin, du carbonate de calcium ou de la silice. Cependant, selon un mode de réalisation préféré de l'invention, l'additif est du talc.

Pour réaliser le revêtement, on prépare tout d'abord une solution aqueuse, cette solution est ensuite appliquée sur la lame de l'essuie-glace que l'on fait ensuite sécher.

La solution comporte de l'eau adoucie, à PH sensiblement neutre.

Pour obtenir une coloration du revêtement, il est incorporé des pigments dans la solution. Ces pigments sont par exemple ceux commercialisés par la société RICHARD. -

La solution est préalablement obtenue à partir d'une prédispersion aqueuse de l'additif, cette prédispersion étant elle-même obtenue en ajoutant à l'additif de l'eau au goutte à goutte.

Lorsque l'additif est du talc, la prédispersion comporte entre 40% et 50% en poids de talc. Préférentiellement, le talc a une granulométrie moyenne de 4 µm.

Le talc est par exemple du "MISTROBOND RG 20" ou du "STEAMIC 00S" commercialisé par la société TALC DE LUZENAC

Une prédispersion commerciale, ou "slurry" peut être utilisée, il s'agit par exemple du "HELICOAT B33" commercialisé par la société TALC DE LUZENAC.

Pour assurer le maintien, la répartition et la dispersion de l'additif, un agent mouillant et un agent épaississant sont utilisés.

L'agent mouillant est par exemple du "LUMITEN PT" commercialisé par la société BASF, et l'agent dispersant peut être du "POLYSALZ S" commercialisé par la société BASF.

La résine constituant le liant de la solution, qui lui confère sa tenue après réticulation lors de l'opération de séchage peut être acrylique et mélamine formol comme par exemple du "ACRYMUL 317R" ou du "PROX ML 370" commercialisés par la société SYNTHRON, elle peut être vinylique, comme le "PRIMAIRE 567" commercialisé par la société PROSPA, la résine peut aussi être une résine polyuréthane comme du "CYDROTHANE 1035" commercialisé par la société CYTEC.

Un additif imperméabilisant peut être ajouté pour permettre au revêtement de résister aux agressions extérieures et notamment aux agents détergents et aux lessives.

L'agent imperméabilisant est par exemple du "DRYOL PAL" ou du "WA 491" commercialisés par la société SYNTHRON.

Pour régler la viscosité de la solution d'émulsion, il est incorporé un agent épaississant.

L'agent épaississant peut être du "PROX A 11" ou du "PROX A 300" commercialisés par la société SYNTHRON.

Ces additifs permettent d'obtenir un revêtement qui présente des propriétés d'essuyage similaires aux revêtements à base de graphite, en ce qui concerne la qualité de l'essuyage et le durée de vie.

Selon un autre mode de réalisation, la solution est basée sur l'utilisation de résines fluorées ou siliconées.

La résine fluorée est à base de polytétrafluoroéthylène (PTFE), de polyfluorure de vinylène (PVDF), ou de perfluoroether, comme par exemple du "SYNTHROPEL FOX" commercialisé par la société SYNTHRON, ou du "FLUORLINK" de la société AUSIMONT.

Une charge fluorée sous forme de poudre peut être ajoutée à la résine en vue de réduire le coefficient de frottement. Cette charge peut être du PTFE en dispersion commercialisé par la société AUSIMONT.

La réduction du coefficient de frottement peut être réalisée par l'ajout d'un polyéthylène comme la "PROXAMINE NP912 GL" commercialisé par la société SYNTHRON.

L'utilisation d'additifs à base fluorée ou siliconée permettent d'obtenir un revêtement qui possède des propriétés de résistance au gel et une certaine résistance à l'adhésion des impuretés.

La solution est appliquée sur la lame d'essuie-glace par projection à l'aide d'une buse de diamètre de sortie de 0.5 mm et sous une pression de 1 bar.

Ce mode de projection permet d'obtenir une agglomération de particules de l'additif, après séchage, ces particules sont liées les unes aux autres par la résine. Cependant, la résine ne comblé pas la totalité des interstices entre les particules de talc, de sorte que ces interstices forment les cavités caractéristiques du revêtement qui peut se comporter à la manière d'une éponge.

Lorsque la lame d'essuie-glace se trouve en présence d'eau, ces cavités se remplissent d'eau par capillarité. L'eau est ainsi retenue tant que la vitre est humide.

En phase de "vitre séchante", l'eau est libérée progressivement à la manière d'une éponge. Ceci permet de conserver un film d'eau entre la lame d'essuie-glace et la vitre, et donc de limiter les phénomènes désagréables.

Des exemples de compositions du revêtement peuvent être résumés dans le tableau suivant donnant les proportions en poids des éléments de la solution:

| **ADDITIF** | **EAU** | **RESINE** | **LUMITEN** | **DRYOL PAL** | **POLYSALZ S** | **PROX A 300** |
|---|---|---|---|---|---|---|
| 30-40 | 40-50 | 10-15 | 0.1-0.4 | 5-6 | 0.1-0.3 | 0.2-1.5 |
| 20-30 | | 55-80 | 0.1-0.4 | 4-6 | 0.1-0.2 | |
| 20-30 | | 55-80 | 0.1-0.4 | 4-6 | 0.1-0.3 | |
| 30-40 | 45-55 | 10-17 | 0.2-0.5 | 5-7 | 0.1-0.3 | |

Des exemples de compositions de la solution pour la réalisation du revêtement peuvent être résumés dans les tableaux suivants donnant les proportions en poids des éléments de la solution :

Solution à base de résine fluorée :

| **SYTHROPEL. FOX** | **PTFE EN DISPERSION** | **EAU** | **PIGMENT** | **PROX A 300** |
|---|---|---|---|---|
| 20-35 | | 60-70 | 3 | |
| 20-35 | 25-30 | 30-45 | 1 | 2 |

Solution à base d'additif minéral clair :

| **TALC EN DISPERTION** | **EAU** | **RESINE** | **LUMITEN** | **DRYOL PAL** | **POLYSALZ S** | **PIGMENT** | **PROX A 300** |
|---|---|---|---|---|---|---|---|
| 30-40 | 40-50 | 10-15 | 0.1-0.4 | 5-6 | 0.1-0.3 | 1.5-4 | 0.2-1.5 |
| 20-30 | | 55-80 | 0.1-0.4 | 4-6 | 0.1-0.2 | 2-3 | |
| 20-30 | | 55-80 | 0.1-0.4 | 4-6 | 0.1-0.3 | 2-4 | |
| 30-40 | 45-55 | 10-17 | 0.2-0.5 | 5-7 | 0.1-0.3 | 1.5-3 | |

## Revendications

1. Revêtement pour une lame d'essuyage en caoutchouc ou en élastomère d'un essuie-glace de véhicule, du type comportant un additif permettant de réduire le coefficient de frottement entre la lame et la vitre, **caractérisé en ce qu'**il comporte des cavités de dimensions microscopiques qui débouchent à l'extérieur du revêtement qui lui confère un caractère hydrophile, et **en ce que** le revêtement est constitué par un agglomérat de particules d'additif, les cavités étant formées par des interstices entre les particules.

2. Revêtement selon la revendication 1, **caractérisé en ce que** l'additif est une poudre.

3. Revêtement selon la revendication 1 ou 2, **caractérisé en ce qu'**il est coloré par la couleur de l'additif.

4. Revêtement selon la revendication 2 ou 3, **caractérisé en ce que** la granulométrie moyenne de la poudre est égale à environ 4 µm.

5. Revêtement selon l'une des revendications 1 à 4, **caractérisé en ce que** l'additif est de couleur claire.

6. Revêtement selon l'une des revendications 1 à 5, **caractérisé en ce que** l'additif est une poudre minérale.

7. Revêtement selon la revendication 6, **caractérisé en ce que** la structure de l'additif est lamellaire.

8. Revêtement selon la revendication 7, **caractérisé en ce que** l'additif est du talc.

9. Revêtement selon l'une quelconque des revendications 1 à 8, **caractérisé en ce qu'**il comporte un autre composant permettant de réduire le coefficient de frottement entre la lame et la vitre.

10. Revêtement selon l'une quelconque des revendications 1 à 9, **caractérisé en ce qu'**il comporte un élément imperméabilisant.

11. Lame d'essuyage d'un essuie-glace de véhicule automobile, **caractérisée en ce qu'**elle est revêtue d'un revêtement conforme à l'une des revendications 1 à 10.

## Claims

1. Coating for a rubber or elastomer blade of a car windscreen wiper, of the type comprising an additive that reduces the coefficient of friction between the blade and the glass, **characterised in that** it comprises microscopic cavities which open onto the outside of the coating, making it water repellent, and **in that** the coating consists of an agglomerate of additive particles, the cavities being formed by the interstices between the particles.

2. Coating according to claim 1, **characterised in that** the additive is a powder.

3. Coating according to claim 1 or 2, **characterised in that** it is coloured by the colour of the additive.

4. Coating according to claim 2 or 3, **characterised in that** the average particle size of the powder is equal to around 4 µm.

5. Coating according to one of the claims from 1 to 4, **characterised in that** the additive has a light colour.

6. Coating according to one of the claims from 1 to 5, **characterised in that** the additive is a mineral powder.

7. Coating according to claim 6, **characterised in that** the additive has a lamellar structure.

8. Coating according to claim 7, **characterised in that** the additive is talc.

9. Coating according to any one of the claims from 1 to 8, **characterised in that** it comprises another component enabling a reduction of the coefficient of friction between the blade and the glass.

10. Coating according to any one of the claims from 1 to 9, **characterised in that** it comprises a waterproofing element.

11. Wiping blade of a car windscreen wiper, **characterised in that** it is covered with a coating according to one of the claims from 1 to 10.

## Patentansprüche

1. Beschichtung eines Wischblatts aus Gummi oder aus Elastomer eines Scheibenwischers eines Fahrzeugs, von der Art mit einem Additiv, mit dem der Reibbeiwert zwischen dem Wischblatt und der Scheibe reduziert werden kann, **dadurch gekennzeichnet, daß** sie Ausnehmungen mit mikroskopisch kleinen Abmessungen umfaßt, die von der Beschichtung nach außen führen, die ihr eine wasseranziehende Eigenschaft verleiht, und daß die Beschichtung aus einem Gemisch aus Additivpartikeln besteht, wobei die Ausnehmungen von den Lücken zwischen den Partikeln gebildet werden.

2. Beschichtung nach Anspruch 1, **dadurch gekennzeichnet, daß** der Additiv ein Pulver ist.

3. Beschichtung nach Anspruch 1 oder 2, **dadurch gekennzeichnet, daß** sie von der Farbe des Additivs eingefärbt wird.

4. Beschichtung nach Anspruch 2 oder 3, **dadurch gekennzeichnet, daß** die durchschnittliche Korngröße des Pulvers gleich ungefähr 4 µm ist.

5. Beschichtung nach einem beliebigen der vorstehenden Ansprüche 1 bis 4, **dadurch gekennzeichnet, daß** der Additiv eine helle Farbe hat.

6. Beschichtung nach einem beliebigen der vorstehenden Ansprüche 1 bis 5, **dadurch gekennzeichnet, daß** der Additiv ein Mineralpulver ist.

7. Beschichtung nach Anspruch 6, **dadurch gekennzeichnet, daß** die Struktur des Additivs plättchenförmig ist.

8. Beschichtung nach Anspruch 7, **dadurch gekennzeichnet, daß** der Additiv Talk ist.

9. Beschichtung nach einem beliebigen der vorstehenden Ansprüche 1 bis 8, **dadurch gekennzeichnet, daß** sie eine weitere Komponente enthält, mit der der Reibbeiwert zwischen dem Wischblatt und der Scheibe reduziert werden kann.

10. Beschichtung nach einem beliebigen der vorstehenden Ansprüche 1 bis 9, **dadurch gekennzeichnet, daß** sie ein Element für den dichten Abschluß umfaßt.

11. Wischblatt eines Scheibenwischers eines Automobilfahrzeugs, **dadurch gekennzeichnet, daß** es mit einer Beschichtung in Übereinstimmung mit einem der Patentansprüche 1 bis 10 versehen ist.
